# EUROPÄISCHE PATENTSCHRIFT

(11) **EP 0 569 807 B1**
(45) Veröffentlichungstag und Bekanntmachung des Hinweises auf die Patenterteilung: **11.12.1996**
(21) Anmeldenummer: 93107121.1
(22) Anmeldetag: 03.05.1993
(51) Int. Cl.: B29C 65/18, B29C 33/02, B31B 1/90

(54) **Vorrichtung zum Verbinden eines Aufreissstreifens mit einer Materialbahn**
Device for joining a tear strip to a web material
Dispositif pour joindre une bande d'arrachage avec une matière en bande

(30) Priorität: 14.05.1992 DE 4215690
(43) Veröffentlichungstag der Anmeldung: 18.11.1993
(73) Patentinhaber: Focke & Co. (GmbH & Co.), D-27283 Verden (DE)
(72) Erfinder: Focke, Heinz, W-2810 Verden (DE); Hill, Frank Joachim, W-2870 Delmenhorst (DE); Mehner, Uwe, W-2870 Delmenhorst (DE)
(74) Vertreter: Bolte, Erich, Dipl.-Ing.

(56) Entgegenhaltungen:
- EP-A- 0 224 808
- DE-A- 3 821 266
- DE-U- 9 102 387
- US-A- 2 552 259
- US-A- 3 218 961
- US-A- 4 288 968

## Beschreibung

Die Erfindung betrifft eine Vorrichtung zum Verbinden eines Aufreißstreifens mit einer Materialbahn, insbesondere einer Folienbahn, an der der Aufreißstreifen mit Abstand zu beiden Rändern angeordnet ist, wobei der Aufreißstreifen und die Materialbahn zur Übertragung von Wärme und Druck über einen Teilumfang einer beheizten Umlenkwalze, nämlich einer Siegelwalze, förderbar sind, die aus zwei Teilwalzen, zwischen denen ein Heizring angeordnet ist, besteht, wobei der Heizring durch zu beiden Seiten desselben verlaufende (Luft-) Spalten gegenüber den Teilwalzen isoliert ist, und wobei der Aufreißstreifen und die Materialbahn derart an der Siegelwalze anliegen, daß sich der Aufreißstreifen im Bereich des Heizrings erstreckt.

Eine solche Vorrichtung ist aus DE-U-91 02 387.4 bekannt. Ein Heizring ist hier zwischen zwei Stützrollen angeordnet. Heizring und Stützrollen sind dabei voneinander völlig getrennt gelagert. Hierdurch ist eine exakte Zentrierung von Heizring und Stützrollen nicht möglich. Infolgedessen kann der Siegeldruck während des Siegelvorgangs variieren. Ferner wird die Materialbahn erst im Bereich der Siegelwalze mit dem bereits vorgeheizten Streifen zusammengeführt. Eine exakte Positionierung des Streifens auf der Materialbahn ist hierdurch erschwert.

Der Erfindung liegt die Aufgabe zugrunde, eine Vorrichtung mit einer beheizten Umlenkwalze zum Verbinden von Aufreißstreifen bzw. -fäden mit einer Materialbahn vorzuschlagen, bei der ein stets gleichbleibendes Siegelergebnis erzielt wird und bei der der Aufreißstreifen stets exakt auf der Materialbahn positioniert ist.

Zur Lösung dieser Aufgabe ist die Vorrichtung dadurch gekennzeichnet, daß die Teilwalzen und der Heizring auf einer gemeinsamen, feststehenden Achse drehbar gelagert sind und daß eine radial außen liegende Heizfläche des Heizrings bündig zu äußeren Mantelflächen der Teilwalzen verläuft oder geringfügig über diese hinwegragt, wobei der Aufreißstreifen und die Materialbahn in einem Bereich vor der Siegelwalze zusammengeführt und dem Umfang der Siegelwalze als Einheit zugeführt sind.

Durch die gemeinsame Lagerung von Heizring und Teilwalzen auf einer gemeinsamen Achse sind diese stets exakt zueinander zentriert. Hierdurch bleibt der Siegeldruck in Abhängigkeit von dem jeweiligen Umschlingungswinkel stets konstant, so daß ein stets gleichbleibendes Siegelergebnis erzielt wird. Dadurch, daß Aufreißstreifen und Materialbahn vor der Siegelwalze zu einer Einheit zusammengeführt und als solche der Siegelwalze zugeführt werden, ist eine exakte Positionierung des Aufreißstreifens auf der Materialbahn erleichtert.

Ein weiterer Vorschlag der Erfindung ermöglicht die Beeinflussung der Übertragung von Wärme und Druck auf die Materialbahn. Dies erfolgt durch Veränderung des Umschlingungswinkels, mit dem die Materialbahn an der Umlenkwalze anliegt. Bei höheren Temperaturen bzw. bei wärmeempfindlichem Material kann der Umschlingungswinkel kleiner sein als bei Material, welches einen höheren Druck und eine längere Temperatureinwirkung erfordert. Dabei ist es durch die erfindungsgemäße Vorrichtung möglich, die Einheit aus Materialbahn und Aufreißstreifen bei zeitweiligem Stillstand der Anlage vollständig von der Materialbahn abzuheben. Hierdurch wird eine Überhitzung von Aufreißstreifen und Materialbahn und somit eine Beschädigung derselben vermieden. Ferner kann bei zeitweiligem Stillstand der Anlage der Heizring weiter beheizt bleiben, wodurch die Anlage nach Beseitigung einer eventuellen Betriebsstörung sofort wieder angefahren werden kann, ohne daß der Heizring erst vorgeheizt werden muß.

Weitere Merkmale der Erfindung ergeben sich aus den Unteransprüchen und werden nachfolgend anhand eines Ausführungsbeispiels näher erläutert. Es zeigt:

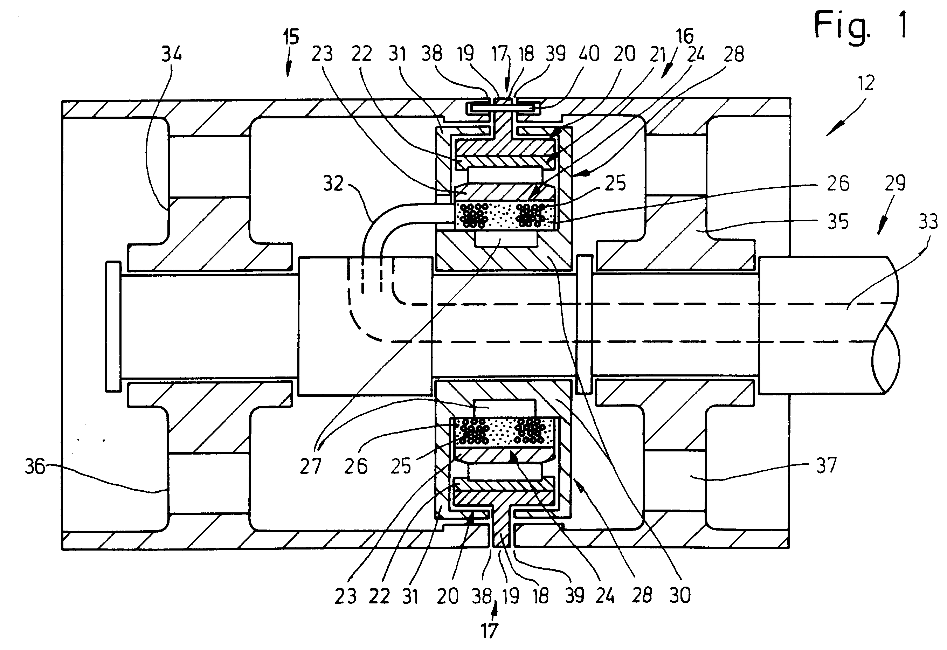

- Fig. 1: Eine Umlenkwalze mit Heizring im Längsschnitt (Axialschnitt),
- Fig. 2: ein System zur Führung von Materialbahn und Aufreißstreifen im Bereich der in verkleinertem Maßstab in Seitenansicht gezeigten Umlenkwalze,
- Fig. 3: eine Einzelheit der Darstellung in Fig. 2 bei veränderter Relativstellung von Organen und in vergrößertem Maßstab.

Das gezeigte Ausführungsbeispiel befaßt sich mit der Verbindung eines Aufreißstreifens 10 mit einer Materialbahn 11. Letztere besteht beispielsweise aus einer Kunststoffolie und dient zu Verpackungszwecken. Eine Außenumhüllung einer Zigaretten-Packung besteht beispielsweise aus derartigem Material mit einem Aufreißstreifen 10.

Zur Verbindung von Aufreißstreifen 10 und Materialbahn 11 sind Wärme und Druck aufzuwenden. Zu diesem Zweck wird die Materialbahn 11 mit dem an diese angelegten Aufreißstreifen 10 über eine Siegelwalze 12 gefördert, in deren Bereich Wärme und Druck auf die Materialbahn 11 und den Aufreißstreifen 10 übertragen wird.

Bei dem vorliegenden Ausführungsbeispiel werden der Aufreißstreifen 10 und die Materialbahn 11 jeweils von eigenständigen Bobinen (nicht gezeigt) abgezogen. In einem Bereich vor der Siegelwalze 12 wird der Aufreißstreifen 10 positionsgenau an die Materialbahn 11 herangeführt, und zwar während des kontinuierlichen Transports derselben. Die Vereinigung erfolgt im Bereich einer Umlenkwalze 13. Die Einheit aus Materialbahn 11 und Aufreißstreifen 10 wird sodann über eine weitere Walze 14 geführt und hier umgelenkt, so daß die Materialbahn 11 mit dem außenliegenden Aufreißstreifen 10 an die Siegelwalze 12 bzw. an deren Mantelfläche herangeführt wird. Nach der Verbindung von Aufreißstreifen 10 und Materialbahn 11 wird diese über weitere Lenkorgane abgefördert und entweder unmittelbar einer Verpackungsmaschine zugeführt oder als Bobine gewickelt.

Die Siegelwalze 12, die ebenfalls eine Umlenkwalze ist, führt die Materialbahn 11 mit dem Aufreißstreifen 10 längs eines Teilbereichs des Umfangs bzw. der Mantelfläche. Während dieser Anlage der Materialbahn 10 an der Siegelwalze 12 wird Wärme übertragen auf die Materialbahn 11, und zwar im Bereich des außen aufliegenden Aufreißstreifens 10. Durch die Anlage der Materialbahn 11 unter Spannung an der Siegelwalze 12 wird auch - soweit erforderlich - eine Andrückkraft zum Verbinden des Aufreißstreifens 10 mit der Materialbahn 11 übertragen.

Die erforderliche Wärme wird im vorliegenden Fall örtlich auf die Materialbahn 11 übertragen, und zwar gezielt im Bereich des Aufreißstreifens 10. Außerhalb desselben wird keine oder allenfalls eine sehr geringe Wärme in die Materialbahn 11 eingeleitet.

Die Siegelwalze 12 ist zu diesem Zweck in besonderer Weise ausgebildet, besteht nämlich bei dem gezeigten Ausführungsbeispiel aus zwei Teilwalzen 15 und 16. Zwischen den mit axialem Abstand voneinander gleichachsig angeordneten Teilwalzen 15, 16 ist ein gesondertes Organ zur Übertragung der Wärme (und des Drucks) auf die Materialbahn 11 im Bereich des Aufreißstreifens 10 vorgesehen. Es handelt sich dabei um einen Heizring 17. Dieser erstreckt sich mit einem ringförmigen Steg 18 zwischen den beiden Teilwalzen 15 und 16. Eine radial außenliegende Heizfläche 19 ist hier bündig mit den Teilwalzen 15, 16, nämlich mit deren äußerer zylindrischer Mantelfläche. Der Heizring 17 bzw. der Steg 18 kann alternativ auch geringfügig über die Mantelfläche der Teilwalzen 15, 16 hinwegragen, wenn ein erhöhter Druck örtlich erzeugt werden soll.

Der Steg 18 ist Teil eines im Querschnitt T-förmigen Ringprofils 20 des Heizrings 17. Dieses äußere Ringprofil 20 besteht vorzugsweise aus einem Material mit hoher Wärmeleitfähigkeit.

Der äußere Teil des Heizrings 17, nämlich das Ringprofil 20, ist drehbar gelagert durch ein Wälzlager 21, im vorliegenden Falle durch ein Nadellager. Ein Außenring 22 desselben ist mit dem Ringprofil 20 verbunden. Ein Innenring 23 ist feststehend gelagert und wird beheizt. Die Wärme wird über das Wälzlager 21 nach außen zum Ringprofil 20 und damit in den Steg 18 zur Heizfläche 19 geleitet.

Eine innenliegende Heizung 24 ist von dem Ringprofil 20 bzw. von dem Wälzlager 21 umgeben. Der Innenring 23 desselben bildet die radial außenliegende Umhüllung der Heizung 24. Diese ist im vorliegenden Falle als Elektroheizung ausgebildet. Heizdrähte 25 sind in gewickelter Form angeordnet und bilden eine elektrische Widerstandsheizung. Die Heizdrähte 25 sind in einen ringförmigen Körper 26 einer ursprünglich formbaren Masse eingebettet. Das Material des Körpers 26 umgibt die gewickelten Heizdrähte 25 vollständig. Das Material ist wärmeleitend. Der Innenring 23 umgibt außen den Körper 26. Innenseitig wird ein Hohlraum 27 gebildet, um eine Wärmeisolierung nach innen zu bilden.

Die vorstehenden Teile des Heizrings 17 finden (überwiegend) Aufnahme in einem ringförmigen Gehäuse 28. Dieses ist feststehend auf einer Achse 29 der Siegelwalze 12 gelagert. Das Gehäuse 28 besteht aus einem wärmeisolierenden Material. An einer ringförmigen Innenwandung 30 liegt (teilweise) der Körper 26 an. Eine Außenwandung 31 ist mit einem ringsherum laufenden Schlitz für den Durchtritt des Stegs 18 versehen.

Zu der Heizung 24 bzw. den Heizdrähten 25 führt eine Elektroleitung 32, die über eine Bohrung 33 in der Achse 29 nach außen führt.

Die beiden Teilwalzen 15, 16 sind jeweils durch innenliegende Stützscheiben 34, 35 auf der gemeinsamen Achse 29 drehbar gelagert. Die Stützscheiben 34, 35 sind ringsherum mit Bohrungen 36, 37 versehen, die ein Ableiten von Wärme aus dem Innenraum der Teilwalzen 15, 16 bewirken. Der Heizring 17 bzw. dessen ringförmiger Steg 18 ist gegenüber den angrenzenden Mantelflächen der Teilwalzen 15, 16 durch ringsherumlaufende Spalte 38, 39 gegen Wärmeübertragung isoliert. Um eine gleichmäßige, insbesondere kontinuierliche Drehbewegung der Organe zu gewährleisten, ist der drehbare Teil des Heizrings 17, nämlich der Steg 18, mit den Teilwalzen 15, 16 verbunden. Längs des Umfangs sind zu diesem Zweck einige, wenige quergerichtete Stifte 40 als Verbindungsorgan zwischen den Teilwalzen 15, 16 und dem Heizring 17 angeordnet.

Zur Steuerung der Siegeltemperatur wird stets die aktuelle Temperatur direkt an der Heizfläche 19 des Heizrings 17 gemessen. Die Temperaturverluste in dem Innenraum können somit unberücksichtigt bleiben. Zur Überwachung der Temperatur der Heizfläche 19 ist ein Infrarotsensor 47 mit geringem Abstand von der Mantelfläche der Siegelwalze 12 angeordnet. Über eine Meßleitung 48 ist der Infrarotsensor 47 mit einer nicht gezeigten Steuereinheit für die Heizung 24 verbunden. Wenn der Infrarotsensor 47 eine Abweichung der Temperatur der Heizfläche 19 ermittelt, wird ein Steuersignal erzeugt, so daß die Heizleistung der Heizung 24 entsprechend angepaßt wird.

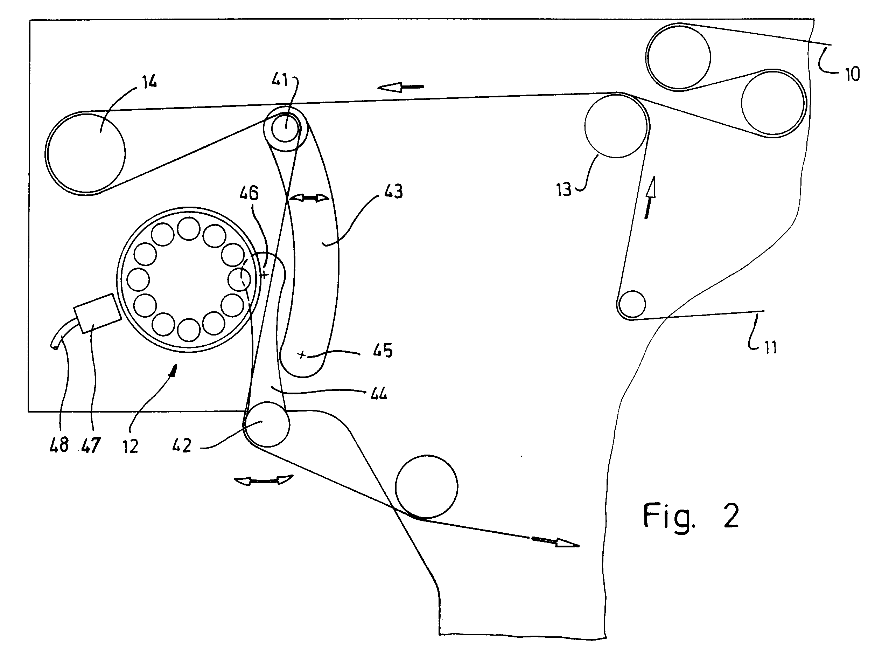

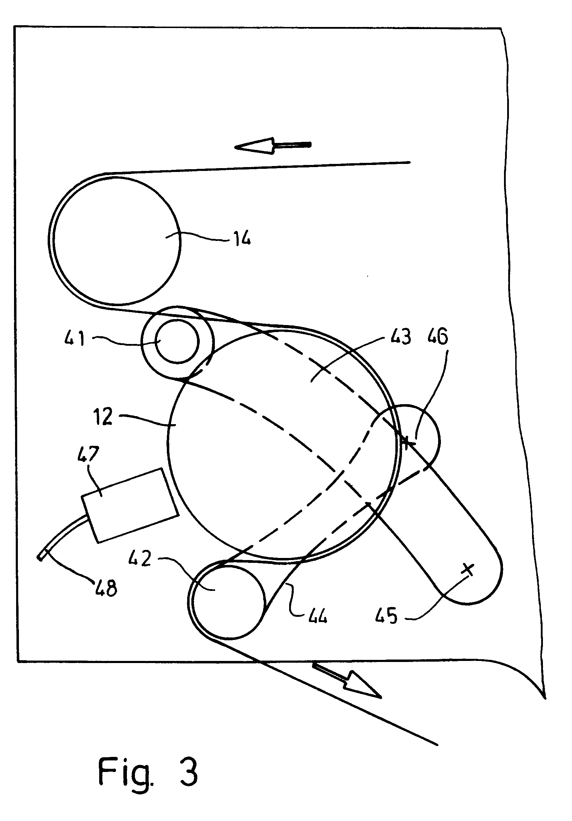

Eine weitere Besonderheit der Vorrichtung, die mit der vorstehend beschriebenen Siegelwalze 12 im Zusammenhang steht, aber auch unabhängig von dieser zum Einsatz kommen kann, ergibt sich aus Fig. 2 und Fig. 3. Danach sind Maßnahmen getroffen, die eine Veränderung des Umschlingungsbereichs der Umlenkwalze für die Materialbahn 11 ermöglichen. Zu diesem Zweck sind hier der Siegelwalze 12 bewegbare Umlenkorgane für die Materialbahn 11 zugeordnet. Diese befinden sich in einer solchen Relativstellung zueinander, daß die Materialbahn 11 vollständig vom Umfang bzw. der Mantelfläche der Umlenkwalze (Siegelwalze 12) abgehoben werden kann (Fig. 2) oder diese mit einem wählbaren Umhüllungsbereich umgibt. Fig. 3 zeigt eine weitgehende Umhüllung der Siegelwalze 12, nämlich etwa zur Hälfte des Umfangs der Walze.

Bei den Umlenkorganen handelt es sich um bewegbare Umlenkrollen 41 und 42. Eine dieser Umlenkrollen 41 befindet sich in einem Bereich oberhalb und die andere Umlenkrolle 42 in einem Bereich unterhalb der Siegelwalze 12. Wenn die Umlenkrollen 41, 42 eine von der Siegelwalze 12 bzw. deren Mantelfläche entfernt liegende Position einnehmen (Fig. 2), wird die Materialbahn 11 an der Siegelwalze 12 vorbeigeleitet bzw. liegt nur mit einem sehr kleinen Umschlingungswinkel an dieser an. Werden hingegen die Umlenkrollen 41, 42 näher an die Siegelwalze 12 herangeführt oder gar in eine Stellung jenseits der Siegelwalze 12 bewegt (bezogen auf die Ausgangsstellung gemäß Fig. 2), ergibt sich ein größer werdender Umschlingungsbereich der Siegelwalze 12 (Fig. 3). Bei dieser ist die eine, obere Umlenkrolle 41 soweit bewegt, daß sie von der Materialbahn 11 abgehoben ist. Die andere, untere Umlenkrolle 42 bildet die notwendige Gegen-Umlenkung zur feststehenden Umlenkwalze 14.

Wie ersichtlich, kann die Veränderung der Umschlingung auch durch lediglich eine bewegbare Umlenkrolle 42 in Verbindung mit einer entsprechend positionierten feststehenden Umlenkwalze 14 bewirkt werden.

Die beiden Umlenkrollen 41, 42 sind je an einem schwenkbaren Lenker 43 bzw. 44 angeordnet. Dabei ist die Relativstellung hier so gewählt, daß der Lenker 43 für die obere Umlenkrolle 41 unterhalb der Siegelwalze 12 mit einem Drehlager 45 schwenkbar gelagert ist. Der Lenker 44 ist um ein höher gelegenes Drehlager 46 schwenkbar. Die Lenker 43, 44 sind zur Einstellung des gewünschten Umschlingungsbereichs in geeigneter Weise bewegbar, z.B. über Wellen im Bereich des Drehlagers 45, 46 oder durch Druckmittelzylinder.

Durch die Veränderung des Umschlingungsbereichs der Siegelwalze 12 kann die Heizdauer - bei vorgegebener Fördergeschwindigkeit - und auch der Anpreßdruck verändert werden.

Dies ist vor allem bei betriebsbedingten Veränderungen der Fördergeschwindigkeit der Materialbahn 11 von Bedeutung. Um stets konstante Temperatur- und/oder Druckverhältnisse zu erzielen, erfolgt hier die Anpassung durch Veränderung des Umschlingungsbereichs der Siegelwalze 12. Hierdurch ist eine im Verhältnis zur Veränderung der Heiztemperatur schnellere Anpassung möglich.

Besonders vorteilhaft ist die Vorrichtung zum Ansiegeln von Aufreißstreifen bzw. Aufreißfäden mit hotmelt geeignet. Dabei kann der Aufreißstreifen 10 in einem ersten Arbeitstakt an die Materialbahn 11 angesiegelt werden, so daß bereits eine erste Verbindung zwischen dem Aufreißstreifen 10 und der Materialbahn 11 gegeben ist. Mit der erfindungsgemäßen Siegelwalze 12 wird sodann die Verbindung vervollständigt, wobei Wärme und Druck ausgeübt werden. Außerdem erfolgt durch die Anlage der Materialbahn 11 mit dem Aufreißstreifen 10 an die zylindrische Mantelfläche der Siegelwalze 12 eine exakte Positionierung des Aufreißstreifens 10.

## Patentansprüche

1. Vorrichtung zum Verbinden eines Aufreißstreifens (10) mit einer Materialbahn (11), insbesondere einer Folienbahn, an der der Aufreißstreifen (10) mit Abstand zu beiden Rändern angeordnet ist, wobei der Aufreißstreifen (10) und die Materialbahn (11) zur Übertragung von Wärme und Druck über einen Teilumfang einer beheizten Umlenkwalze, nämlich einer Siegelwalze (12), förderbar sind, die aus zwei Teilwalzen (15, 16), zwischen denen ein Heizring (17) angeordnet ist, besteht, wobei der Heizring durch zu beiden Seiten desselben verlaufende (Luft-) Spalten (38, 39) gegenüber den Teilwalzen (15, 16) isoliert ist, und wobei der Aufreißstreifen (10) und die Materialbahn (11) derart an der Siegelwalze (12) anliegen, daß sich der Aufreißstreifen im Bereich des Heizrings (17) erstreckt, **dadurch gekennzeichnet**, daß die Teilwalzen (15, 16) und der Heizring (17) auf einer gemeinsamen, feststehenden Achse (29) drehbar gelagert sind und daß eine radial außen liegende Heizfläche (19) des Heizrings (17) bündig zu äußeren Mantelflächen der Teilwalzen (16, 17) verläuft oder geringfügig über diese hinwegragt, wobei der Aufreißstreifen (10) und die Materialbahn (11) in einem Bereich vor der Siegelwalze (12) zusammengeführt und dem Umfang der Siegelwalze (12) als Einheit zugeführt sind.

2. Vorrichtung nach Anspruch 1, dadurch gekennzeichnet, daß der Heizring (17) innerhalb überstehender Bereiche der Teilwalzen (15, 16) angeordnet ist und mit einem radialgerichteten Steg (18) zwischen denselben herausragt, wobei der Steg (18) die radial außenliegende Heizfläche (19) aufweist.

3. Vorrichtung nach Anspruch 1, dadurch gekennzeichnet, daß der Heizring (17) im außenliegenden Bereich ein beheiztes Ringprofil (20) mit dem radialgerichteten Steg (18) und eine innenliegende, ringförmige elektrische Heizung (24) aufweist, wobei die Heizung (24) feststeht und das Ringprofil wärmeleitend und drehbar auf der Heizung (24) gelagert ist, insbesondere durch ein Wälzlager (21).

4. Vorrichtung nach Anspruch 3, dadurch gekennzeichnet, daß der Heizring (17) in einem feststehend innerhalb der Siegelwalze (12) angeordneten Gehäuse (28) aus wärmeisolierendem Material angeordnet ist und aus diesem lediglich mit dem radial gerichteten Steg (18) herausragt.

5. Vorrichtung nach Anspruch 3, dadurch gekennzeichnet, daß die Heizung (24) aus in gewickelter Form angeordneten Heizdrähten (25) gebildet ist, die in einem ringförmigen Körper (26) eingebettet sind.

6. Vorrichtung nach Anspruch 3, dadurch gekennzeichnet, daß zu der Heizung (24) eine Elektroleitung (32) führt, die über eine Bohrung (33) in der Achse (29) nach außen führt.

7. Vorrichtung nach Anspruch 1, dadurch gekennzeichnet, daß der Heizring (17) bzw. der radialgerichtete Steg (18) desselben durch mehrere längs des Umfangs verteilt angeordnete, achsparallele Stifte (40) mit den Teilwalzen (15, 16) verbunden ist.

8. Vorrichtung nach Anspruch 1, dadurch gekennzeichnet, daß die Temperatur des Heizrings (17) direkt, insbesondere mittels Infrarotsensor (48), an der Heizfläche (19) fortlaufend meßbar ist, wobei bei Temperaturabweichungen ein entsprechendes Steuersignal erzeugbar ist zur Regelung der Siegeltemperatur.

9. Vorrichtung zum Transport einer Materialbahn (11) und eines Aufreißstreifens, insbesondere zum Verbinden eines Aufreißstreifens (10) mit der Materialbahn (11), die über mindestens eine Umlenk- oder Siegelwalze (12) geführt ist, wobei eine Einheit aus der Materialbahn (11) mit dem Aufreißstreifen (10) im Bereich der Umlenk- oder Siegelwalze (12) über Umlenkorgane (41, 42) geleitet ist, die bewegbar sind, so daß aufgrund der Relativstellung der Umlenkorgane (41, 42) zur der in ihrer Lage unveränderlichen Umlenk- oder Siegelwalze (12) der Bereich der Anlage der Einheit aus Materialbahn (11) und Aufreißstreifen (10) am Umfang der Umlenk- oder Siegelwalze (12) zur Veränderung von auf die Einheit aus Materialbahn (11) und Aufreißstreifen (10) übertragener Wärme oder Druck veränderbar ist, dadurch gekennzeichnet, daß eine der Umlenkorgane (41) sich in einem Bereich oberhalb und das andere Umlenkorgan (42) in einem Bereich unterhalb der Umlenk- oder Siegelwalze (12) befindet, wobei die Umlenkorgane (41, 42) je an einem schwenkbaren Lenker (43, 44) angeordnet sind, von denen der eine Lenker (43) für das obere Umlenkorgan (41) durch ein Drehlager (45) schwenkbar gelagert ist, das außerhalb des Bereichs der Umlenk- oder Siegelwalze (12) und unterhalb derselben angeordnet ist, und der andere Lenker (44) für das untere Umlenkorgan (42) durch ein Drehlager (46) schwenkbar gelagert ist, das ebenfalls außerhalb des Bereichs der Umlenk- oder Siegelwalze (12) und oberhalb des Drehlagers (45) für den ersten Lenker (43) angeordnet ist.

## Claims

1. Apparatus for connecting a tear-open strip (10) to a material web (11), in particular a film web, on which the tear-open strip (10) is arranged at a distance from the two borders, it being possible for the tear-open strip (10) and the material web (11) to be conveyed over part of the circumference of a heated deflecting roller, namely a sealing roller (12), for the transmission of heat and pressure, said roller comprising two sub-rollers (15, 16) between which a heating ring (17) is arranged, the heating ring being insulated with respect to the sub-rollers (15, 16) by (air) gaps (38, 39) running on either side of said ring, and the tear-open strip (10) and the material web (11) resting against the sealing roller (12) such that the tear-open strip extends in the region of the heating ring (17), characterized in that the sub-rollers (15, 16) and the heating ring (17) are mounted rotatably on a common, fixed spindle (29), and in that a radially outer heating surface (19) of the heating ring (17) runs flush with the outer lateral surfaces of the sub-rollers (16, 17) or projects slightly beyond these, the tear-open strip (10) and the material web (11) coming together in a region upstream of the sealing roller (12) and being fed to the circumference of the sealing roller (12) as a unit.

2. Apparatus according to Claim 1, characterized in that the heating ring (17) is arranged within overhanging regions of the sub-rollers (15, 16) and projects between the same by means of a radially directed web (18), the web (18) having the radially outer heating surface (19).

3. Apparatus according to Claim 1, characterized in that the heating ring (17) has, in the outer region, a heated ring profile (20) with the radially directed web (18) and an inner, annular electric heating device (24), the heating device (24) being fixed and the ring profile being mounted in a heat-conductive and rotatable manner on the heating device (24), in particular by means of a rolling-contact bearing (21).

4. Apparatus according to Claim 3, characterized in that the heating ring (17) is arranged in a housing (28), fixed within the sealing roller (12) and consisting of heat-insulating material, and only has the radially directed web (18) projecting out of said housing.

5. Apparatus according to Claim 3, characterized in that the heating device (24) is formed by heating wires (25) which are arranged in wound form and are embedded in an annular body (26).

6. Apparatus according to Claim 3, characterized in that an electric line (32) leads to the heating device (24), said electric line leading to the outside via a bore (33) in the spindle (29).

7. Apparatus according to Claim 1, characterized in that the heating ring (17) or the radially directed web (18) of the same is connected to the sub-rollers (15, 16) by a plurality of axis-parallel pins (40) which are distributed along the circumference.

8. Apparatus according to Claim 1, characterized in that the temperature of the heating ring (17) can be measured in a continuous manner directly, in particular by means of an infrared sensor (47), on the heating surface (19), it being possible, in the case of temperature deviations, to produce a corresponding control signal for regulating the sealing temperature.

9. Apparatus for transporting a material web (11) and a tear-open strip, in particular for connecting a tear-open strip (10) to the material web (11) which is guided over at least one deflecting or sealing roller (12), a unit, which comprises a material web (11) with the tear-open strip (10), being directed, in the region of the deflecting or sealing roller (12), over deflecting members (41, 42) which are movable, with the result that, on account of the position of the deflecting members (41, 42) relative to the deflecting or sealing roller (12), the position of which cannot be changed, the region where the unit comprising material web (11) and tear-open strip (10) rests against the circumference of the deflecting or sealing roller (12) can be changed in order to change heat or pressure transmitted to the unit comprising material web (11) and tear-open strip (10), characterized in that one of the deflecting members (41) is located in the region above the deflecting or sealing roller (12) and the other deflecting member (42) is located in a region beneath the deflecting or sealing roller (12), the deflecting members (41, 42) each being arranged on a pivotable link (43, 44), of which one link (43) for the upper deflecting member (41) is mounted pivotably by means of a pivot bearing (45), which is arranged outside the region of the deflecting or sealing roller (12) and beneath the same, and the other link (44) for the lower deflecting member (42) is mounted pivotably by means of a pivot bearing (46), which is likewise arranged outside the region of the deflecting or sealing roller (12) and above the pivot bearing (45) for the first link (43).

## Revendications

1. Dispositif de liaison d'une bande à ouverture par déchirement (10) à une bande de matériau (11), en particulier une bande de feuille, sur lequel la bande d'ouverture par déchirement (10) est disposée à distance de deux bordures, la bande d'ouverture par déchirement (10) et la bande de matériau (11) étant transportables pour transférer de la chaleur et de la pression sur une partie de la périphérie, à un rouleau de renvoi chauffé, précisément un rouleau de scellage (12), constitué de deux rouleaux partiels (15, 16) entre lesquels un anneau chauffant (17) est disposé, l'anneau chauffant étant isolé vis-à-vis des rouleaux partiels (15, 16) au moyen d'un interstice (d'air) (38, 39) s'étendant des deux côtés de celui-ci, et la bande d'ouverture par déchirement (10), la bande de matériau (11) appuyant sur le rouleau de scellement (12), de manière que la bande d'ouverture par déchirement s'étende dans la zone de l'anneau chauffant (17), caractérisé par le fait que les rouleaux partiels (15, 16) et l'anneau chauffant (17) sont montés tournants sur un axe (29) fixe commun, et qu'une surface de chauffage (19) radialement extérieure de l'anneau chauffant (17) s'étend en affleurement vis-à-vis de la surface d'enveloppe extérieure des rouleaux partiels (16, 17) ou bien dépasse légèrement au-dessus de ceux-ci, la bande d'ouverture par déchirement (10) et la bande de matériau (11) étant guidées conjointement dans une zone devant le rouleau de scellement (12) et étant amenées, d'un tout, à la périphérie du rouleau de scellement (12).

2. Dispositif selon la revendication 1, caractérisé par le fait que l'anneau chauffant (17) est disposé à l'intérieur de zones en dépassement des rouleaux partiels (15, 16) et sort, par une nervure (18), orientée radialement, entre ceux-ci, la nervure (18) présentant la surface de chauffage (19) radialement extérieure.

3. Dispositif selon la revendication 1, caractérisé par le fait que l'anneau chauffant (17) présente, dans la zone extérieure, un profil annulaire (20) chauffé avec la nervure (18) orientée radialement et un chauffage (24) électrique, annulaire, intérieur, le chauffage (24) étant fixe et le profil annulaire étant conducteur de la chaleur et monté à rotation sur le chauffage (24), en particulier au moyen d'un palier à roulement (21).

4. Dispositif selon la revendication 3, caractérisé par le fait que l'anneau chauffant (17) est disposé dans un carter (28) fixe en matériau isolant de la chaleur, carter disposé à l'intérieur du rouleau de scellement (12), et sort de celui-ci seulement par la nervure (18) orientée radialement.

5. Dispositif selon la revendication 3, caractérisé par le fait que le chauffage (24) est constitué de fils chauffants (25) disposés sous forme d'enroulement, noyés dans un corps (26) à forme annulaire.

6. Dispositif selon la revendication 3, caractérisé par le fait qu'au chauffage (24) mène une ligne électrique (32) qui passe par un perçage (33) ménagé dans l'axe (29), afin d'aller vers l'extérieur.

7. Dispositif selon la revendication 1, caractérisé par le fait que l'anneau chauffant (17), ou la nervure (18) orientée radialement de celui-ci, est relié aux rouleaux partiels (15, 16) au moyen de plusieurs tiges (40) parallèles à l'axe, disposées réparties le long de la périphérie.

8. Dispositif selon la revendication 1, caractérisé par le fait que la température de l'anneau chauffant (17) est mesurable directement de façon continue sur la surface (19), en particulier au moyen d'un capteur à infrarouge (48), un signal de commande correspondant pouvant être produit en cas d'abaissement de température et en vue de réguler la température de scellement.

9. Dispositif de transport d'une bande de matériau (11) et d'une bande d'ouverture par déchirement, en particulier pour relier une bande d'ouverture par déchirement (10) à la bande de matériau (11) qui est guidée par au moins un rouleau de renvoi ou de scellage (12), une unité constituée de la bande de matériau (11) avec la bande d'ouverture par déchirement (10) étant dirigée dans la zone du rouleau de renvoi ou de scellage (12) par l'intermédiaire d'organes de renvoi (41, 42) mobiles, si bien que, du fait de la position relative des organes de renvoi (41, 42) par rapport au rouleaux de renvoi ou de scellage (12) dont la position est invariable, la zone d'appui de l'ensemble constitué de la bande de matériau (11) et de la bande d'ouverture par déchirement (10) sur la périphérie du rouleau de renvoi ou de scellement (12) est modifiable en vue de modifier la chaleur ou la pression transmise à l'unité constituée de la bande de matériau (11) et de la bande d'ouverture par déchirement (10), caractérisé par le fait que l'un des organes de renvoi (41) se trouve dans une zone située au-dessus et l'autre organe de renvoi (42) dans une zone située au-dessous du rouleau de renvoi ou de scellement (12), les organes de renvoi (41, 42) étant disposés chacun sur un bras articulé (43, 44) pivotant, dont un premier bras articulé (43) est monté à pivotement pour l'organe de renvoi supérieur (41) au moyen d'un palier de rotation (45), qui est disposé à l'extérieur de Ta zone du rouleau de renvoi ou de scellage (12) et au-dessous de celui-ci, et l'autre bras articulé (44) destiné à l'organe de renvoi inférieur (42) étant monté pivotant au moyen d'un palier de rotation (46) qui est disposé également hors de la zone du rouleau de renvoi ou de scellement (12) et au-dessus du palier de rouleau (45) destiné au premier bras articulé (43).
